(19) Europäisches Patentamt / European Patent Office / Office européen des brevets

(11) **EP 3 507 220 B1**

(12) **FASCICULE DE BREVET EUROPEEN**

(45) Date de publication et mention de la délivrance du brevet:
**18.09.2019 Bulletin 2019/38**

(21) Numéro de dépôt: **18720311.2**

(22) Date de dépôt: **26.03.2018**

(51) Int Cl.:
**B65G 53/56** *(2006.01)*

(86) Numéro de dépôt international:
**PCT/FR2018/000068**

(87) Numéro de publication internationale:
**WO 2018/172638 (27.09.2018 Gazette 2018/39)**

(54) **VANNE D'AIGUILLAGE**

UMLENKVENTIL

DIVERTER VALVE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.03.2017 FR 1752444**

(43) Date de publication de la demande:
**10.07.2019 Bulletin 2019/28**

(73) Titulaire: **Termet, Sébastien**
**29120 Sainte Marine (FR)**

(72) Inventeur: **Termet, Sébastien**
**29120 Sainte Marine (FR)**

(74) Mandataire: **Ipside**
**4, rue de Kerogan**
**29337 Quimper Cedex (FR)**

(56) Documents cités:
**EP-A2- 2 151 400      CN-A- 105 782 544**
**FR-A1- 2 527 735      NL-A- 7 213 203**
**US-A- 406 447**

**EP 3 507 220 B1**

**Description**

DOMAINE TECHNIQUE DE L'INVENTION

La présente invention concerne une vanne d'aiguillage.
Elle concerne également la description d'un système de distribution de granules pour l'élevage d'animaux aquatiques. La vanne d'aiguillage s'applique, par exemple, à l'aquaculture et notamment la pisciculture terrestre de grossissement, d'alevinage, et les laboratoires de recherche.

ETAT DE LA TECHNIQUE

Bien souvent les aliments pour animaux sont fragiles et friables. Chargés en lipides, ils se composent de poudres compactées à hautes températures suivant les différents procédés des fournisseurs de granulés. Quel que soit le procédé, les granulés pour poissons sont très fragiles. D'une granulométrie de 1 à 13 mm, les élevages de grossissement effectuent des rationnements pouvant atteindre 300 kg sur des bassins de 60 m de longueur sur 6 m de largeur, selon d'autres exemples 150m de long. Le rapport entre la longueur d'un bassin et sa largeur est de 1/10 (en général). Ces bassins peuvent atteindre plusieurs centaines de mètres.
Il existe trois types de granulés : coulant (dense), semi-flottant, flottant. La fragilité du granulé est proportionnelle à sa compacité, donc à son type et à sa granulométrie. Pour une granulométrie et une température égale, un granulé flottant est donc plus fragile, qu'un granulé coulant. La température d'un granulé est aussi un élément important : cassant lorsqu'il est froid, et friable (se délite) avec une forte température.
La structure d'une vanne d'aiguillage doit proscrire le mieux possible l'apparition de zones de rétention et de stagnation d'aliment résiduel. En effet, ces stocks résiduels perturbent la distribution des doses programmées à plusieurs titres. Ils diminuent la ration finalement distribuée puisque les stocks résiduels n'atteindront pas les animaux.
Ils risquent de venir ultérieurement s'ajouter à une ration destinée à un autre parc, et qui parcourra le tronc commun du réseau incluant la vanne considérée. Dans ce cas tant la quantité additionnée que la nature de l'aliment résiduel et enfin sa taille peuvent entraîner des désordres alimentaires au sein de la population de cet autre parc. Enfin, les stocks résiduels sont potentiellement susceptibles de perturber le fonctionnement de la vanne elle-même. Cette exigence de délivrance intégrale de chaque dose d'aliment est naturellement d'autant plus cruciale que le réseau est plus complexe et présente davantage d'embranchements. FR 2 527 735 décrit une vanne selon le préambule de la revendication 1.
Un des objectifs de la présente invention est de proposer une vanne d'aiguillage améliorant l'étanchéité sans zone de rétention et en réduisant l'usure des pièces mécaniques pour améliorer la tenue dans le temps de la vanne d'aiguillage.

OBJET DE L'INVENTION

La présente invention vise à remédier à ces inconvénients.
A cet effet, la présente invention vise une vanne d'aiguillage positionnée dans une canalisation d'amenée, ladite vanne d'aiguillage comprenant un corps entre une première extrémité et une deuxième extrémité, ladite première extrémité est sensiblement plane dans laquelle un orifice d'entrée est positionné, l'orifice d'entrée est de forme circulaire et comporte un axe de révolution positionné selon une parallèle de l'axe longitudinal de la vanne d'aiguillage, la deuxième extrémité est sensiblement plane et comporte une calotte sphérique sur laquelle sont positionnés au moins deux orifices de sortie, chaque orifice de sortie est de forme circulaire, ladite vanne d'aiguillage comporte un boisseau mobile contenu dans le corps de vanne d'aiguillage, ledit boisseau mobile comporte un conduit traversant et rigide adapté à faire communiquer sélectivement l'orifice d'entrée avec un des orifices de sortie.
Ainsi, le plan de joint de la calotte sphérique assure une meilleure étanchéité à des fortes pressions, pour usure réduite et une fiabilité mécanique accrue.
La vanne d'aiguillage est tout en inox (version 316L). La motorisation est électrique ou pneumatique pour faire tourner le boisseau mobile. La vanne d'aiguillage est compacte, étanche sur toutes les voies, PS6 bar multivoies.
Selon un exemple de réalisation, la vannes d'aiguillage permet d'aiguiller des pulvérulents. Selon un autre exemple de réalisation, la vanne d'aiguillage permet d'aiguiller des fluides. Les domaines d'application sont l'agroalimentaire, la pharmacie, cosmétique...
L'invention est avantageusement mise en oeuvre selon les modes de réalisation et les variantes exposées ci-après, lesquelles sont à considérer individuellement ou selon toute combinaison techniquement opérante.
Dans un mode de réalisation, le corps de vanne est de forme cylindrique circulaire ou rectangulaire.
Dans un mode de réalisation, le boisseau mobile est rigide.
Le boisseau rigide permet de garantir une tenue. Le boisseau mobile a un diamètre intérieur intégral et continu.

Dans un mode de réalisation, le boisseau mobile est étanche par rapport à la conduite d'amenée.

Dans un mode de réalisation, le boisseau mobile comporte un embout monté en pivot glissant sur le boisseau mobile en contact avec la calotte sphérique par un moyen de rappel, l'embout étant adapté à réaliser l'étanchéité entre le boisseau mobile et l'un des orifices de sortie.

Dans un mode de réalisation, le boisseau mobile est accouplé à un moteur par un engrenage adapté à faire communiquer sélectivement l'orifice d'entrée avec un des orifices de sortie.

Dans un mode de réalisation, la vanne d'aiguillage comporte un dispositif débrayable adapté à couper la communication entre l'orifice d'entrée et un des orifices de sortie. Un débrayage manuel permet à l'utilisateur de prendre la main sur le système à tout moment notamment en cas de maintenance.

Dans un mode de réalisation, la calotte sphérique comporte un disque mobile couplé au boisseau mobile et articulé autour d'un axe.

Dans un mode de réalisation, ladite vanne d'aiguillage étant positionnée dans un système de distribution de granules pour l'élevage d'animaux aquatiques.

## BREVE DESCRIPTION DES FIGURES

D'autres avantages, buts et caractéristiques de la présente invention ressortent de la description qui suit faite, dans un but explicatif et nullement limitatif, en regard des dessins annexés, dans lesquels :

- la figure 1, un schéma d'un exemple d'installation du système comprenant des éléments d'un mode de réalisation particulier du système objet de la présente invention,
- la figure 2, un schéma d'un exemple de certains éléments d'un mode de réalisation particulier du système objet de la présente invention,
- les figures 3 à 5 expliquent le fonctionnement de distribution des granulés selon un mode de réalisation particulier du système objet de la présente invention,
- la figure 6 représente une courbe du réglage du variateur des pompes à air,
- la figure 7 représente une vue de la vanne d'aiguillage selon un mode de réalisation particulier du système objet de la présente invention,
- la figure 8 représente une vue de la vanne d'aiguillage sans le corps de ladite vanne d'aiguillage selon une mode de réalisation de la figure 6,
- la figure 9 représente le boisseau mobile selon une mode de réalisation particulier,
- la figure 10 représente une vue de la vanne d'aiguillage avec une coupe de la canalisation d'amenée dans laquelle sont visibles les granulés,
- les figures 11 et 12 montrent le fonctionnement débrayable de la vanne d'aiguillage,
- la figure 13 représente une vue de détails de la calotte sphérique.

## DESCRIPTION D'EXEMPLES DE REALISATION DE L'INVENTION

Le système de distribution de granules pour l'élevage d'animaux aquatiques est modulaire, automatique et autonome et s'adapte à de nombreuses exploitations existantes. Il permet le dosage et la distribution de pulvérulents (granulés) pour l'élevage d'animaux. Il permet de déposer précisément en un point ou plusieurs points simultanés ou alternativement des granulés, quelle que soit la distance à parcourir et quelle que soit la granulométrie (200 microns à Ø12mm), et le poids (quelques grammes à plusieurs tonnes).

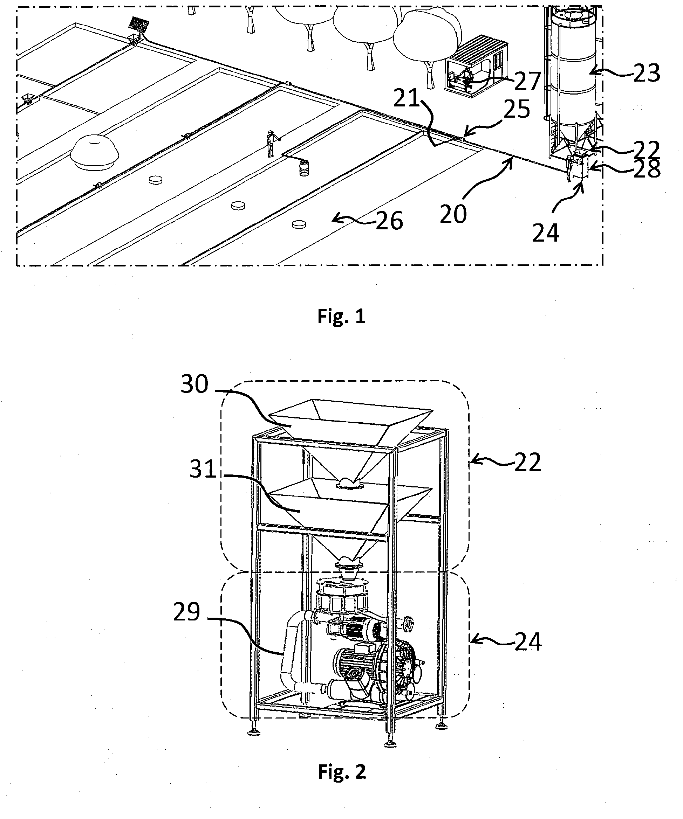

La figure 1 représente un exemple d'installation du système.

Le système de distribution de granules pour l'élevage d'animaux aquatiques, comprenant une canalisation d'amenée 20 par jet d'air adaptée à acheminer des granules dans au moins un point de dépose 21 d'un bassin d'élevage 26. Dans un autre exemple, il existe plusieurs point de dépose 21 pour un même bassin. Le système décrit aussi un dispositif de dosage 22 de granules comportant une zone de stockage de granules avec une sortie. La zone de stockage est représentée par des silos.

Le système décrit également un dispositif de distribution 24 de granules comportant une entrée de granules reliée au dispositif de dosage 21 et une sortie reliée à la canalisation d'amenée 20.

Le système décrit une vanne d'aiguillage 25 positionnée dans la canalisation d'amenée 20. La vanne d'aiguillage 25 comprenant un orifice d'entrée et au moins deux orifices de sortie. Selon des variantes non représentées, la vanne d'aiguillage comprend trois, quatre, cinq... orifices de sortie.

Le système décrit au moins un bassin d'élevage 26. Sur cette figure, il existe plusieurs bassins. Chaque bassin comporte un capteur de mesure (non représenté) du milieu aquatique sélectionné parmi : un capteur de température, un capteur du taux de nitrate, un capteur de mesure d'oxygénation, un capteur de turbidité, un capteur niveau sonore.

Selon un autre exemple, tous ces capteurs mesurent un bassin seul d'élevage. Dans le cas où il existe plusieurs bassins, chaque bassin comporte plusieurs capteurs de mesures.

Le système décrit un terminal communiquant 27 adapté à la lecture d'information du système et la commande de distribution de nourriture. Sur cette figure, il est représenté un utilisateur dans une cabine et un autre utilisateur au niveau du dispositif de distribution 24. Il existe un autre terminal communiquant à cet endroit.

Le protocole de transfert des granulés se fait à travers un réseau de conduite d'amenée et réalisé par des vannes d'aiguillages de plusieurs voies. Le nombre de voies est non limité. Dans l'absolu, on peut imaginer une infinité de voies. Ces vannes permettent d'aiguiller le flux de granulés vers le point de dépose sélectionné, dans l'exemple représenté ci dessus un bassin. Le réseau de conduite d'amenée, où les conduites d'amenée se divisent à chaque vanne d'aiguillage, créant ainsi un réseau. Dans cet exemple piscicole, la conduite d'amenée est un diamètre nominal DN 50.

Toute la conduite d'amenée (tuyauterie) est configurée pour ne pas altérer le granulé, à savoir : coudes très grands rayons (rayon à la fibre neutre mini de R400mm pour un diamètre de 50 mm intérieur soit une courbure qualifiée 8R), montée positive gravitaire inférieure à 30cm sur pente de 20° maximum.

Le réseau est composé de conduites principales appelées pour la suite « Ligne mère » qui démarrent du dispositif de distribution, puis longent les rangées de bassins. Les piscicultures sont constituées d'une ou plusieurs rangées de bassins. Entre deux bassins, une vanne d'aiguillage est disposée. Cette vanne d'aiguillage est principalement composée de deux voies, c'est-à-dire deux orifices de sorties. Selon un autre exemple, la vanne d'aiguillage comporte trois voies en version standard, mais une voie est volontairement bouchée pour créer un orifice pour la maintenance. Dans un autre exemple, la vanne d'aiguillage se décline en version trois voies. Par exemple la troisième voie permet la maintenance de la conduite.

De cette vanne d'aiguillage, une conduite longe la séparation de deux bassins. Le long de cette conduite, y sont disposées à intervalle déterminé, plusieurs vannes trois voies. Le fait d'avoir plusieurs vannes d'aiguillage va permettre d'avoir plusieurs points de dépose dans un même bassin.

Cette conduite est appelée « ligne fille » ; elle permet de distribuer deux bassins, laissant l'accès de l'autre bassin mitoyen pour le pisciculteur.

Les trois derniers bassins d'une rangée sont gérés par une unique vanne d'aiguillage trois voies, afin d'économiser une vanne.

La figure 2 représente certains éléments d'un mode de réalisation particulier du système.

Cette figure montre le dispositif de dosage 22 et le dispositif de distribution 24.

Dans le dispositif de distribution 24, avant que l'air ne touche le granulé, il existe selon ce mode de réalisation un échangeur thermique. L'échangeur thermique est constitué d'une double enveloppe de refroidissement. De l'eau est puisée par une pompe dans la rivière et y est rejetée. L'entrée d'eau est en point eau. La section de sortie est réduite par un orifice calibré pour permettre le remplissage de l'échangeur. Le débit d'entrée est supérieur au débit de sortie, assurant le remplissage. Le temps de montée en température de l'air est inférieur au temps de remplissage de l'échangeur. La surface d'échange de la tubulure est calculée, pour ne pas avoir besoin de régulation de température ou d'électrovanne. Le dispositif de refroidissement est piloté par l'unité de commande et à l'aide de mesure de température, le dispositif de refroidissement comporte une vidange de l'échangeur thermique par effet de gravité, notamment pour préserver l'échangeur thermique en cas de gel.

Cette figure montre une trémie de pesée 30 adaptée à peser une quantité de granules et une trémie de temporisation 31 est positionnée entre la trémie de pesée et l'entrée du dispositif de distribution de granules.

La trémie de pesée 30 est posée sur des pesons et permet de peser la quantité de granules désirée.

Ce principe de double trémie permet une pesée en temps masqué pendant la phase d'injection des granulés.

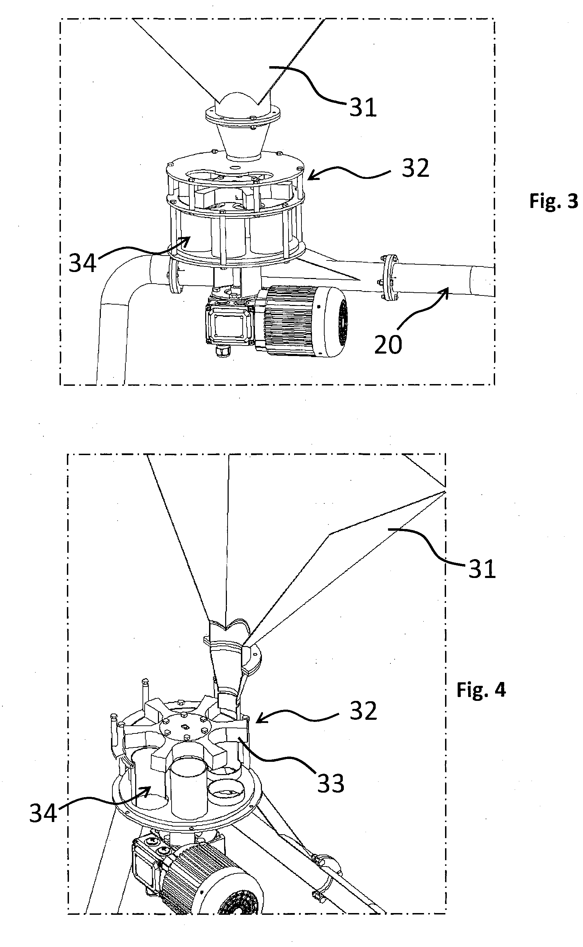

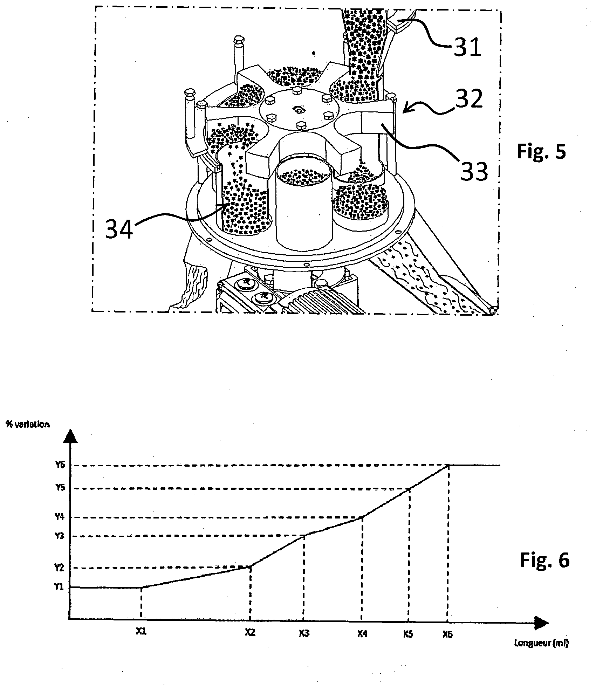

Les figures 3 à 5 expliquent le fonctionnement de distribution des granulés. Les granules sont représentés uniquement sur la figure 5. Les figures 4 et 5 sont des vues en coupe.

Après l'entrée de granules dans le dispositif de distribution 24 de granules se trouve un séparateur rotatif 32 adapté à séparer la quantité de granules en au moins deux parties. Dans l'exemple représenté, le séparateur rotatif 32 comprend six ailettes 33.

Chaque partie de granules tombe par effet de la gravité dans un contenant de forme cylindrique d'un barillet rotatif 34. Le contenant a un volume supérieur au volume de chaque partie de granule.

Après rotation du barillet 34 selon un pas, le contenant se trouve dans une position étanche, puis selon un autre pas, le volume tombe par un effet de gravité dans la canalisation d'amenée.

Dans une variante, la rotation est continue.

La figure montre deux étages, le premier étage correspond au séparateur rotatif 32 muni d'ailette 33 et le deuxième étage correspond au barillet rotatif 34.

Les granulés tombent dans le premier étage du séparateur rotatif 32. Le premier étage est constitué de six compartiments rotatifs séparés par une ailette 33. Le premier étage et le deuxième étage sont séparés par un plateau fixe au bâti sur lequel tombent les granulés. Le plateau est ouvert à certains endroits pour faire tomber par effet de gravité les granulés du premier étage vers le deuxième étage. Les ouvertures sont diamétralement opposées au point de dépose (180°). Le séparateur rotatif 32 entraîne le volume de granulés en rotation sur 180°, pour le déposer délicatement dans les contenants du barillet rotatif 34.

Le deuxième étage comprend des contenants dont le volume est égal à 75% du volume des 6 compartiments rotatifs.

Le principe est de ne jamais remplir intégralement un injecteur, afin de ne pas broyer le granulé. En effet, un cisaillement est possible entre les pièces en rotation et le plateau. La position angulaire des contenants et ailettes 33 est ajustée pour éviter tout broyage.

Sur le même principe, la canalisation d'amenée contenant de l'air en pression et le deuxième étage sont séparés par un plateau fixe (ou platine) au bâti. Une ouverture est réalisée dans le plateau. L'ouverture est diamétralement opposée au point de remplissage des contenants (180°). La rotation du barillet entraîne le volume de granulés en rotation sur 180°, pour le déposer délicatement dans le flux d'air.

Les deux étages (séparateur rotatif 32 et barillet rotatif 34) sont entraînés par le même axe. La motorisation de cet axe utilise un motoréducteur composé d'un frein et d'un variateur. A l'image des doubles trémies, le séparateur rotatif 32 et le barillet rotatif 34 permettent une séparation en temps masqué pendant l'injection des granulés dans la canalisation d'amenée par une buse. Cette buse favorise l'écoulement du flux de granulés par l'air pressurisé. En fonction du débit de la pompe, l'accélération instantanée que subi un granulé isolé est importante.

Selon une variante, et pour ne pas détériorer le granulé, une buse tangentielle est positionnée sous le point d'injection.

Mode de transfert : proportionnel débit/poids :

Pour ajuster la consommation d'énergie (notion écologique) et la vitesse des granulés nécessaire et suffisante pour ne pas les détériorer, le moteur de la pompe à air est accouplé à un variateur pour permettre une gestion de la puissance proportionnellement à la distance du point de dépose. Chaque position (distance) de vanne par rapport à la vanne qui la précède est enregistrée dans le système. Ainsi la distance à parcourir par les granulés est affectée pour chaque vanne. Ainsi, le système permet aussi de contrer les pertes de charges.

La figure 6 représente une courbe du réglage du variateur des pompes à air paramétrables qui dépend de la configuration du site et du nb de coudes notamment).

Selon cet exemple, dans une version standard avec deux coudes et 5 vannes sur le parcours du flux de granulé on a :

$$Y1= 30\% - x1 = 0$$

$$Y2 = 40\% - x2 = 25m$$

$$y6 = 100\% - x6 = 300m \text{ (données pour une pompe donnant 385mBar 580m3/h)}$$

Pilotage du variateur de la pompe à air :

a. Le démarrage de la pompe à air est effectué en vingt secondes avant l'introduction des granulés dans le flux d'air (ce temps sera paramétrable).

b. Le pilotage du variateur se fait en fonction de la perte de charge de la tuyauterie jusqu'à la vanne. Une courbe en six points réglables permet d'obtenir la consigne du variateur.

c. Une longueur par vanne est affectée pour le calcul de la longueur globale (longueur depuis vanne précédente, paramétrable).

d. La temporisation d'arrêt de la pompe à air sera proportionnelle à la longueur de la tuyauterie. Cette fonction sera paramétrable en fonction de la longueur de tuyauterie et d'un coefficient k.

En fonction du type de granulé (fragilité) et de la granulométrie de granulé la quantité de granulés injectés par unité de volume d'air est proportionnelle. Par exemple, en considérant des granulés de Ø2mm (A) et des granulés Ø9mm (B), à poids égal de granulés A + B, et de distance égale à parcourir (réglage pompe air identique), la distance moyenne entre les granulés en sortie du dispositif de distribution est plus élevée pour A que pour B. Plus on augmente la distance à parcourir, plus la distance moyenne entre les granulés augmente. Le flux de granulés s'effondre pour former une rivière de granulés en point bas de la conduite d'amenée (test sur une conduite posée sur un sol parfaitement plat) : il existe un phénomène caractéristique d'une masse trop importante à transporter. La puissance de distribution diminue beaucoup. C'est pourquoi, à distance égale à parcourir, un granulé de forte masse sera plus dur à transporter qu'un granulé léger. Le moteur du barillet rotatif est sur variateur. L'objet est de maîtriser la puissance de distribution en kg/min, en maîtrisant la distance moyenne entre les granulés caractéristiques du mode d'écoulement des pulvérulents, tout en évitant le phénomène de « rivière » en fonction de la cible de dépose et du diamètre du granulé.

Ci-dessous un exemple de calcul de données du système pour un type de granulé.

1 tour = 1 kg à densité 1,6 litres par kg sur 6 compartiments soit 1 compartiment égale 166.67gr

| type de granulé | 1 | 2 | 3 | 4 | 5 | 6 | 7 |
|---|---|---|---|---|---|---|---|
| **diamètre granulé** | **1,9** | **3** | **4,5** | **6,5** | **9** | **11** | **12** |

Vitesse de rotation nominale (base calcul):

Granulé flottant (densité = 1.2)= 20 tr/min soit 20kg /min (paramétrable à l'afficheur) à L=150m.

Granulé semi-flottant (densité = 1.4)= 20 tr/min soit 20kg /min à L=125m.

Granulé coulant (densité = 1.6)= 20 tr/min soit 20kg /min à L=100m.

Règle de correction vitesse du barillet en fonction de la distance et du type et du diamètre du granulé :

Règle d'optimisation du transfert.

Réduction de 1tr/min par 20m au variateur dans la limite de 10kg/min à partir de L figé.

Au delà la puissance de la pompe est augmentée de 5% par 20m limite à 100%.

Les fonctions simplifiées de dosage permettent de s'affranchir de cette fonction et de forcer un nb de kg/min en accédant au terminal de commande.

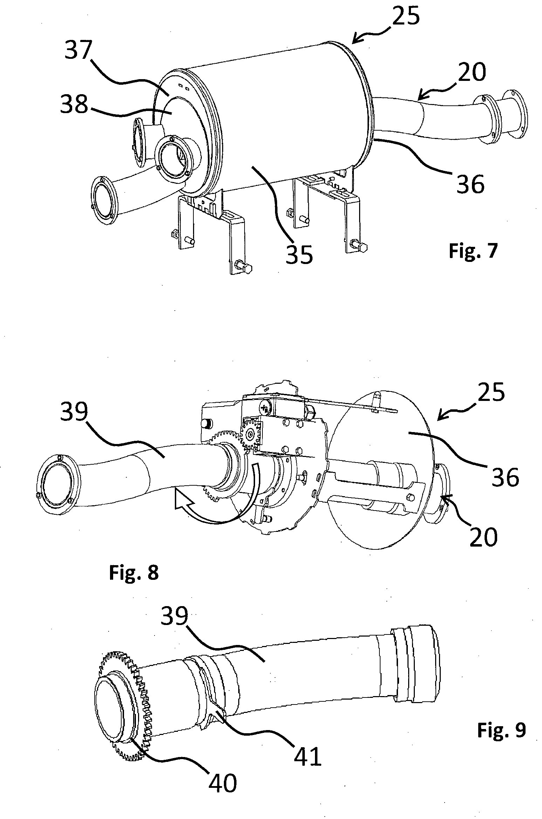

Les figures 7 et 8 représentent une vue de vanne d'aiguillage 26.

La vanne d'aiguillage 26 comporte un corps de vanne de forme cylindrique circulaire entre une première extrémité 36 et une deuxième extrémité 37.

La première extrémité 36 est plane dans laquelle l'orifice d'entrée est positionné. L'orifice d'entrée est de forme circulaire et comporte un axe de révolution positionné selon une parallèle de l'axe longitudinal de la vanne d'aiguillage.

La deuxième extrémité 37 est plane et comporte une calotte sphérique 38 sur laquelle sont positionnés les orifices de sortie. Chaque orifice de sortie est de forme circulaire.

La vanne d'aiguillage 25 comporte un dispositif débrayable adapté à couper la communication entre l'orifice d'entrée et un des orifices de sortie.

La vanne d'aiguillage 25 comprend de l'inox.

Dans une autre variante, la vanne d'aiguillage 25 est en inox.

La vanne d'aiguillage 25 est étanche jusqu'à 6 bar (pression statique).

Le raccordement à la tuyauterie existante est de tout type alimentaire, par exemple selon les normes NF (acronyme de norme française), DIN (acronyme de Deutsches Institut Normung), SMS (acronyme de Swedish Metric Standard)...

Selon des exemple de réalisation, le raccord SMS est composé d'un raccord mâle, d'un raccord femelle, d'un joint pour l'étanchéité ainsi que d'un écrou pour relier les deux raccords ; le raccord DIN : composé d'un raccord mâle, d'un raccord femelle, d'un joint pour l'étanchéité ainsi que d'un écrou pour relier les deux raccords ; le raccord MACON (marque déposée) : composé d'un Raccord mâle, d'un raccord femelle, d'un joint pour l'étanchéité ainsi que d'un écrou pour relier les deux raccords ; le raccord CLAMP (marque déposée) : composé d'un Raccord mâle, d'un raccord femelle, d'un joint pour l'étanchéité ainsi que d'un collier pour relier les deux raccords.

La figure 9 représente le boisseau mobile 39.

La vanne d'aiguillage 25 comporte un boisseau mobile 39 contenu dans le corps 35 de vanne d'aiguillage 25. Le boisseau mobile 39 comporte un conduit traversant et rigide adapté à faire communiquer sélectivement l'orifice d'entrée avec un des orifices de sortie. Le boisseau mobile est mobile en rotation et permet d'assurer l'étanchéité entre l'orifice d'entrée et un des orifices de sortie. La rotation est effectuée au niveau d'une des extrémités du boisseau mobile, l'extrémité qui se trouve à proximité de l'orifice d'entrée de la vanne d'aiguillage 25.

Le boisseau mobile est cintré d'un angle de l'ordre de 20°, suivant un rayon de courbure à la fibre neutre de R400mm.

Le boisseau mobile 39 est mis en rotation par un système motorisé. Aux extrémités du coude sont soudés des pièces inox. En entrée un axe vient recevoir une roue dentée 40; cette pièce sert aussi de guidage en rotation. Un drapeau, y est soudé précisément par rapport au plan de cintrage. Il permet l'arrêt en rotation du moteur. A l'extrémité du boisseau mobile se trouve un manchon inox qui reçoit une pièce cylindrique de révolution circulaire en PTFE (acronyme de polytétrafluoroéthylène) en liaison pivot glissant.

Entre le manchon inox et la pièce cylindrique est positionné un ressort, non représenté. Selon une autre variante, c'est un joint en élastomère.

Ce ressort pousse la pièce cylindrique sur la calotte sphérique, afin de garantir l'étanchéité.

Gestion du temps réel

La granulométrie et le poids à distribuer pour chaque bassin sont définis par un logiciel de nourrissage spécifique. Le poids journalier à distribuer est défini par le nombre de poissons dans le bassin, son âge, sa taille, son espèce, la saison, l'environnement (qualité de l'eau, présence de prédateurs...), les conditions géographique (altitude, environnement, etc..), les conditions climatiques (Pression atmosphérique, T°C de l'eau, T°C d'Oxygène...etc.).

Tous les signaux analogiques (type 0-10V, 4-20mA, 0-20mA) ci-dessous, sont connectés au système, et sont retransmis en temps réel à l'opérateur (fréquence maxi de transmission limité à la vitesse de scrutation du système, soit moins de 8ms) : (listing non -exhaustif)

- T°C eau : consigne de correction ou d'arrêt de nourrissage sur seuil bas et haut. Selon un exemple, si la température est supérieure à 6.5°c alors arrêt nourrissage.
- son : consigne d'arrêt de nourrissage du bassin sur seuil bas. Niveau d'activité sonore est caractéristique d'un faible appétit (alarme non bloquante). Selon un exemple, si le seuil atteint 20db alors arrêt du nourrissage.
- Turbidité : consigne d'arrêt de nourrissage du bassin sur seuil haut. Selon un exemple, si turbidité est supérieur à 1 uTN (pour Unité de Turbidité Néphélométrique) alors arrêt nourrissage.
- O2 control : consigne d'arrêt de nourrissage du bassin sur seuil bas. Selon un exemple, si O2 est supérieur à 10 mg/litre arrêt nourrissage, alors démarrage aérateur et oxygénateur.
- NH4 control : consigne d'arrêt de nourrissage du bassin sur seuil haut. Selon un exemple, si le pH est en dehors des plages 6,8 et 8 alors arrêt nourrissage.

Pour chacun de ces signaux, un seuil d'alerte est défini par l'opérateur au terminal communiquant du système.

Le système envoi l'information de dépassement du seuil à l'unité de commande et au terminal communiquant.

Le système déclenche les actions définies par le protocole :

Niveau sécurité : le système met le bassin en sécurité et informe le terminal communiquant du niveau de sécurité. En mode sécurité le système prend seul la décision d'agir mais informe toujours le terminal communiquant.

L'unité de commande comporte :

- une base de données d'information de la quantité de granules à distribuer pour un bassin,
- un moyen de traitement des données de la base de données pour envoyer l'information de la quantité de granules au dispositif de dosage pour un bassin,
- un moyen de traitement des données de la base de données pour envoyer un jet d'air proportionnel à la distance du point de dépose,
- un moyen de communication adapté à échanger les données de capteur avec le terminal communiquant.

L'unité de commande est pilotée par le terminal communiquant.

Ajustement de la pompe

La puissance de la pompe est ajustée en fonction de la longueur du point de dépose et de la densité du granulé.

Pour chaque vanne d'aiguillage la distance de tuyauterie jusqu'au doseur est enregistrée à la mise en service pour toutes les vannes d'aiguillage de bassin des lignes filles (pas les aiguillages sur les lignes mères) : bassin par bassin, vanne pas vanne. La distance entrée par l'opérateur est la distance à la vanne d'aiguillage en amont.

La vitesse de rotation du barillet rotatif est ajustée à la capacité de distribution en kg/min.

Selon une variante, une temporisation existe entre deux distributions de granulés. Une vidange de la ligne bassin du dépôt résiduel de granulé : c'est-à-dire après la fin de distribution, la pompe à air est maintenue à 100% de son fonctionnement pendant une durée :

La temporisation d'arrêt de la pompe à air sera proportionnelle à la longueur de la tuyauterie. Cette fonction sera paramétrable en fonction de la longueur de tuyauterie et d'un coefficient k.

La tuyauterie est étanche sur toutes les voies.

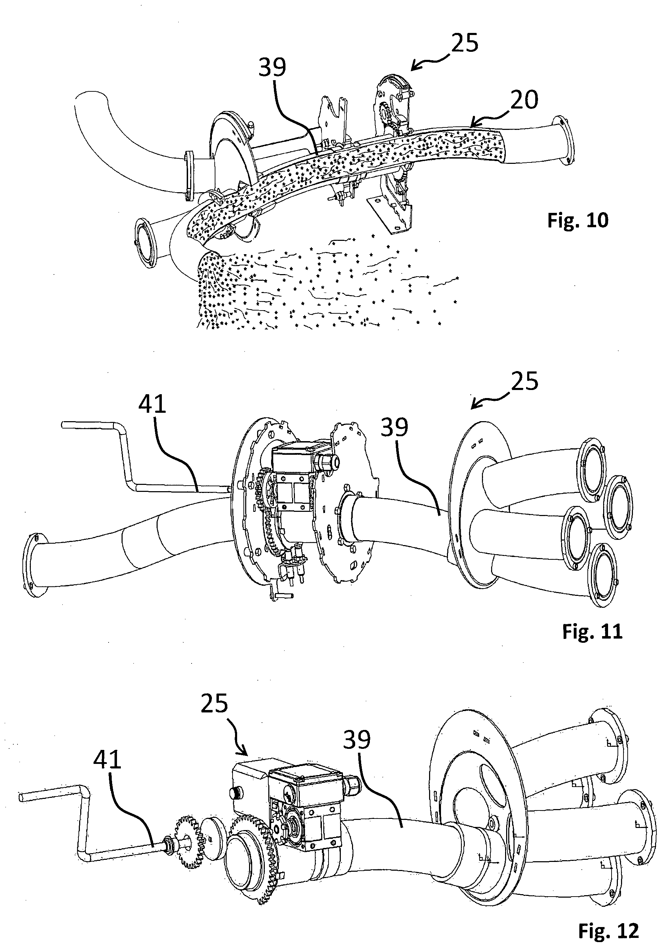

La figure 10 représente une vue de la vanne d'aiguillage 25 avec une coupe de la canalisation d'amenée 20 dans laquelle sont visibles les granulés.

Les figures 11 et 12 montrent le fonctionnement débrayable de la vanne d'aiguillage 25.

La vanne d'aiguillage 25 comporte un insert pour une manivelle 41 et permettre le débrayage manuel.

Dans cet exemple, la vanne possède quatre orifices de sortie.

Le boisseau mobile 39 est accouplé à un moteur par un engrenage adapté à faire communiquer sélectivement l'orifice d'entrée avec un des orifices de sortie. Le boisseau mobile est rigide.

Le dispositif débrayable est adapté à couper la communication entre l'orifice d'entrée et un des orifices de sortie pour la maintenance de la vanne d'aiguillage. Le dispositif débrayable comporte des roues dentées couplées à un disque ayant un trou de forme rectangulaire et permet de désaccoupler l'entraînement du boisseau mobile.

Lorsque l'on insère la manivelle 41 dans le disque, l'extrémité de la manivelle va pousser une roue dentée pour désaccoupler l'engrenage du boisseau mobile avec le moteur d'entraînement.

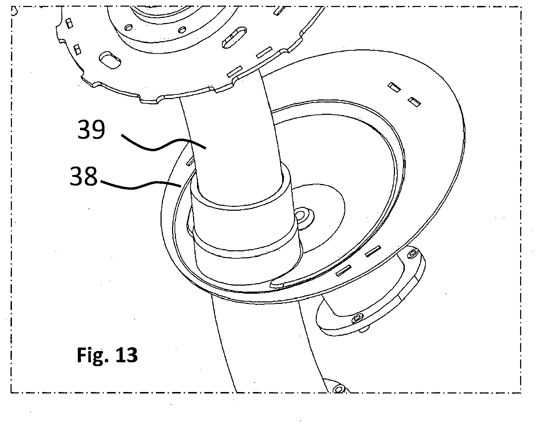

La figure 13 montre une vue de détails de la calotte sphérique 38. La calotte sphérique 38 comporte, en outre, un disque mobile articulé d'un axe et qui suit le boisseau mobile et assure l'étanchéité.

Le boisseau mobile 39 comporte un embout monté en pivot glissant sur le boisseau mobile en contact avec la calotte sphérique par un moyen de rappel. L'embout étant adapté à réaliser l'étanchéité entre le boisseau mobile et l'un des orifices de sortie.

NOMENCLATURE

| 20 | canalisation d'amenée |
| 21 | point de dépose |
| 22 | dispositif de dosage |
| 23 | zone de stockage de granules |
| 24 | dispositif de distribution |
| 25 | vanne d'aiguillage |
| 26 | bassin d'élevage |
| 27 | terminal communiquant |
| 28 | unité de commande |
| 29 | dispositif de refroidissement |
| 30 | trémie de pesée |
| 31 | trémie de temporisation |
| 32 | séparateur rotatif |
| 33 | ailette |
| 34 | barillet rotatif |
| 35 | corps de vanne d'aiguillage |
| 36 | première extrémité du corps de vanne d'aiguillage |
| 37 | deuxième extrémité du corps de vanne d'aiguillage |
| 38 | calotte sphérique |
| 39 | boisseau mobile |
| 40 | roue dentée |
| 41 | manivelle |

**Revendications**

1. Vanne d'aiguillage (25) positionnée dans une canalisation d'amenée (20), ladite vanne d'aiguillage (25) comprenant un corps entre une première extrémité (36) et une deuxième extrémité (37), ladite première extrémité (36) est sensiblement plane dans laquelle un orifice d'entrée est positionné, l'orifice d'entrée est de forme circulaire et comporte un axe de révolution positionné selon une parallèle de l'axe longitudinal de la vanne d'aiguillage, la deuxième extrémité (37) est sensiblement plane, la vanne étant **caractérisée en ce que** la deuxième extrémité (37) comporte une calotte sphérique (38) sur laquelle sont positionnés au moins deux orifices de sortie, chaque orifice de sortie est de forme circulaire, ladite vanne d'aiguillage (25) comporte un boisseau mobile (39) contenu dans le corps (35) de vanne d'aiguillage (25), ledit boisseau mobile (39) comporte un conduit traversant et rigide adapté à faire communiquer sélectivement l'orifice d'entrée avec un des orifices de sortie.

2. Vanne selon la revendication 1, dans laquelle le corps de vanne est de forme cylindrique circulaire ou rectangulaire.

3. Vanne selon la revendication 1, dans laquelle le boisseau mobile (39) est rigide.

**4.** Vanne selon la revendication 1, dans laquelle le boisseau mobile est étanche par rapport à la conduite d'amenée (20).

**5.** Vanne selon la revendication 1, dans lequel le boisseau mobile comporte un embout monté en pivot glissant sur le boisseau mobile (39) en contact avec la calotte sphérique par un moyen de rappel, l'embout étant adapté à réaliser l'étanchéité entre le boisseau mobile et l'un des orifices de sortie.

**6.** Vanne selon la revendication 1, dans laquelle le boisseau mobile (39) est accouplé à un moteur par un engrenage adapté à faire communiquer sélectivement l'orifice d'entrée avec un des orifices de sortie.

**7.** Vanne selon la revendication 1, dans laquelle la vanne d'aiguillage (25) comporte un dispositif débrayable adapté à couper la communication entre l'orifice d'entrée et un des orifices de sortie.

**8.** Vanne selon la revendication 1, dans laquelle la calotte sphérique (38) comporte un disque mobile couplé au boisseau mobile (39) et articulé autour d'un axe.

**9.** Vanne selon la revendication 1, dans laquelle ladite vanne d'aiguillage (25) étant positionnée dans un système de distribution de granules pour l'élevage d'animaux aquatiques.

**Patentansprüche**

**1.** Verteilerventil (25), das in einer Zuführkanalisation (20) positioniert ist, wobei das Verteilerventil (25) einen Körper zwischen einem ersten Ende (36) und einem zweiten Ende (37) umfasst, wobei das erste Ende (36) im Wesentlichen flach ist, in dem eine Eingangsöffnung positioniert ist, wobei die Eingangsöffnung Kreisform aufweist und eine Rotationsachse umfasst, die entlang einer Parallelen der Längsachse des Verteilerventils positioniert ist, wobei das zweite Ende (37) im Wesentlichen flach ist, wobei das Ventil **dadurch gekennzeichnet ist, dass** das zweite Ende (37) eine sphärische Kalotte (38) umfasst, auf der mindestens zwei Ausgangsöffnungen positioniert sind, wobei jede Ausgangsöffnung Kreisform aufweist, wobei das Verteilerventil (25) einen beweglichen Ventildurchgang (39) umfasst, der in dem Körper (35) des Verteilerventils (25) enthalten ist, wobei der bewegliche Ventildurchgang (39) eine durchgehende und starre Leitung umfasst, die angepasst ist, um selektiv die Eingangsöffnung mit einer der Ausgangsöffnungen in Kommunikation zu setzen.

**2.** Ventil nach Anspruch 1, wobei der Ventilkörper kreisförmige oder rechteckige Zylinderform aufweist.

**3.** Ventil nach Anspruch 1, wobei der bewegliche Ventildurchgang (39) starr ist.

**4.** Ventil nach Anspruch 1, wobei der bewegliche Ventildurchgang bezüglich der Zuführleitung (20) dicht ist.

**5.** Ventil nach Anspruch 1, wobei der bewegliche Ventildurchgang einen Ansatz umfasst, der als Zapfen gleitend auf dem beweglichen Ventildurchgang (39) mit der sphärischen Kalotte durch ein Rückstellmittel in Berührung ist, wobei der Ansatz angepasst ist, die Abdichtung zwischen dem beweglichen Ventildurchgang und einer der Ausgangsöffnungen herzustellen.

**6.** Ventil nach Anspruch 1, wobei der bewegliche Ventildurchgang (39) durch ein Radgetriebe, das angepasst ist, um selektiv die Eingangsöffnung mit einer der Ausgangsöffnungen in Kommunikation zu setzen, mit einem Motor gekoppelt ist.

**7.** Ventil nach Anspruch 1, wobei das Verteilerventil (25) eine auskuppelbare Vorrichtung umfasst, die angepasst ist, um die Kommunikation zwischen der Eingangsöffnung und einer der Ausgangsöffnungen zu unterbrechen.

**8.** Ventil nach Anspruch 1, wobei die sphärische Kalotte (38) eine bewegliche Scheibe, die mit dem beweglichen Ventildurchgang (39) gekoppelt und um eine Achse angelenkt ist, umfasst.

**9.** Ventil nach Anspruch 1, wobei das Verteilerventil (25) in einem Körnerverteilungssystem für die Zucht von Wassertieren positioniert ist.

**Claims**

1.  Diverter valve (25) positioned in a supply pipe (20), said diverter valve (25) comprising a body between a first end (36) and a second end (37), said first end (36) is substantially planar wherein an inlet opening is positioned, the inlet opening is of circular shape and comprises an axis of revolution positioned in parallel with the longitudinal axis of the diverter valve, the second end (37) is substantially planar, the valve being **characterised in that** the second end (37) comprises a spherical cap (38) whereon are positioned at least two outlet openings, each outlet opening is of circular shape, said diverter valve (25) comprises a movable plug (39) contained in the body (35) of the diverter valve (25), said movable plug (39) comprises a rigid through-channel capable of making the inlet opening communicate selectively with one of the outlet openings.

2.  Valve according to claim 1, wherein the valve body is of circular or rectangular cylindrical shape.

3.  Valve according to claim 1, wherein the movable plug (39) is rigid.

4.  Valve according to claim 1, wherein the movable plug is sealed in relation to the supply pipe (20).

5.  Valve according to claim 1, wherein the movable plug comprises a pivotably mounted endpiece sliding on the movable plug (39) in contact with the spherical cap via a return means, the endpiece being suitable for forming the seal between the movable plug and one of the outlet openings.

6.  Valve according to claim 1, wherein the movable plug (39) is coupled to a motor by a gear suitable for making the inlet opening communicate selectively with one of the outlet openings.

7.  Valve according to claim 1, wherein the diverter valve (25) comprises a declutchable device suitable for cutting off the communication between the inlet opening and one of the outlet openings.

8.  Valve according to claim 1, wherein the spherical cap (38) comprises a mobile disc coupled to the movable plug (39) and articulated around an axis.

9.  Valve according to claim 1, wherein said diverter valve (25) is positioned in a system for distributing granules for the breeding of aquatic animals.

**Fig. 1**

**Fig. 2**

**Fig. 3**

**Fig. 4**

Fig. 5

Fig. 6

Fig. 7

Fig. 8

Fig. 9

**Fig. 10**

**Fig. 11**

**Fig. 12**

39

38

**Fig. 13**

**RÉFÉRENCES CITÉES DANS LA DESCRIPTION**

**Documents brevets cités dans la description**

- FR 2527735